(19) Europäisches Patentamt
European Patent Office
Office européen des brevets

(11) **EP 3 553 630 A1**

(12) **EUROPEAN PATENT APPLICATION**

(43) Date of publication:
**16.10.2019 Bulletin 2019/42**

(51) Int Cl.:
***G06F 3/01*** *(2006.01)*      ***G06T 19/00*** *(2011.01)*

(21) Application number: **18305455.0**

(22) Date of filing: **13.04.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **InterDigital CE Patent Holdings
75017 Paris (FR)**

(72) Inventors:
• **JOUET, Pierrick
  35576 Cesson-Sévigné (FR)**

• **BAILLARD, Caroline
  35576 Cesson-Sévigné (FR)**
• **FRADET, Matthieu
  35576 Cesson-Sévigné (FR)**
• **LAURENT, Anthony
  35576 Cesson-Sévigné (FR)**

(74) Representative: **Huchet, Anne et al
InterDigital CE Patent Holdings
20, rue Rouget de Lisle
92130 Issy-les-Moulineaux (FR)**

(54) **METHOD FOR ASSISTING A POSITIONING OF A USER, CORRESPONDING COMPUTER PROGRAM PRODUCT AND DEVICE**

(57)      A method is proposed for assisting a positioning, in a real-world environment, of a user of an augmented reality device rendering, on an image plane of the augmented reality device, an augmented reality scene overlaid on a view of the real-world environment. Such method comprises:
- determining (S300) an information representative of an optimal location of the user during the rendering based at least on:
- a field of view of the augmented reality device;
- at least one convex hull associated to the augmented reality scene; and
- at least one object visibility area associated to a corresponding object in the augmented reality scene; and

- delivering (S320) the information representative of an optimal location to the user.

Figure 3

## Description

## 1. FIELD OF THE DISCLOSURE

The present disclosure relates generally to the field of Augmented Reality (AR).

More specifically, the disclosure relates to a method for assisting a positioning, in a real-world environment, of a user of an augmented reality device rendering an augmented reality scene overlaid on a view of the real-world environment captured by the augmented reality device.

The disclosure can be of interest in any field where AR is used and where the positioning of the user is of importance for an optimum user experience, both in consumer fields (e.g. video gaming, multimedia content rendering, etc.) or professional fields (e.g. military applications, healthcare applications, etc.).

## 2. TECHNOLOGICAL BACKGROUND

An AR application overlays three-dimensional artificial objects (e.g. computer-generated imagery, also called CGI) atop the real world. Realism and real-time performance are key criteria to assess AR applications. There are two types of AR devices: "optical see-through devices", like smart-glasses for example and "video pass-through" devices, like smartphones or tablets for instance.

Video pass-through devices are apparatus equipped with a display screen, a camera and means for the user to control the pose (location and aiming direction) of the camera in real time. For example, smartphones and tablets are AR devices when running an AR application, using their front screen and their rear-facing camera. In this case, the user controls the camera pose by handling the device. The video captured by the camera is rendered on-the-fly on the screen. The AR application overlays virtual objects of an AR scene on the images of the video.

Optical see-through devices combine computer-generated imagery with "through the glasses" image of the real world, usually through a slanted semi-transparent mirror.

When placed at certain locations, the user may watch an entire AR scene. However, when placed too close from the location of the AR scene some of the AR objects may not be seen. conversely, when placed too far from the location of the AR scene, AR objects are small and details may be not seeable on the display of the AR device.

To resolve this problem, the user has to search for the optimal location by himself. Such a solution is not satisfying because the user is not always aware that he is missing objects or details and because the search of the optimal location is a tedious task which disturbs the pleasant use of the AR application.

There is thus a need for a method for determining and delivering an information representative of the optimal location for the user of the augmented reality device.

## 3. SUMMARY

A particular aspect of the present disclosure relates to a method for assisting a positioning, in a real-world environment, of a user of an augmented reality device rendering, on an image plane of the augmented reality device, of an augmented reality scene overlaid on a view of the real-world environment. Such method comprises:

- determining an information representative of an optimal location of the user during the rendering based at least on:

  - a field of view of the augmented reality device;
  - at least one convex hull associated to the augmented reality scene; and
  - at least one object visibility area associated to a corresponding object in the augmented reality scene; and

- delivering the information representative of an optimal location to the user.

Thus, the present disclosure proposes a new and inventive solution for determining and delivering an information representative of the optimal location for the user of the augmented reality device, such acts being performed for instance by a processor. For instance, the information representative of the optimal location can be rendered to the user by the augmented reality device.

More particularly, this determination relies only on features of both the augmented reality scene (e.g. through convex hull(s) associated to it and through visibility area(s) of one or more of the objects associated to it) and of the augmented reality device (e.g. through its field of view). Consequently, such determination can be done before the start of the rendering of the augmented reality scene, thus allowing a full and confident determination independently of any real-time constraints. A corresponding information representative of the optimal location (e.g. whether the optimal location itself, or a map representative of the best locations in the real-world environment, or any indication for guiding the user toward such location, etc.) can be delivered to the user for him to enjoy at best the augmented reality scene.

According to one embodiment, said determining an information representative of an optimal location comprises:

- calculating an information representative of a scene visibility area of the augmented reality scene based on the at least one object visibility area; and
- calculating an information representative of a scene

comfort area of the augmented reality scene based on the field of view and on the at least one convex hull.

The information representative of the optimal location is determined based at least on the information representative of a scene visibility area and on the information representative of a scene comfort area.

Thus, taking into account for both the overall shape of the augmented reality scene in view of the caption capacities of the augmented reality device (e.g. through its field of view), and for the visibility area(s) of the object(s) of the augmented reality scene allow determining an optimum positioning of the user.

According to one embodiment, the augmented reality scene comprises a set of N objects having associated object visibility areas. Said calculating an information representative of a scene visibility area comprises intersecting the object visibility areas for delivering the scene visibility area.

Thus, a scene visibility area, in which most of the objects of the augmented reality scene can be seen optimally, is easily calculated and so do the information representative of the scene visibility area.

According to one embodiment, the at least one convex hull comprises a scene convex hull. Said calculating an information representative of a scene comfort area comprises, for the scene convex hull and for a given theoretical location of the augmented reality device in the real-world environment along a given projection axis originating from a reference location in the scene convex hull:

- determining a theoretical width of the scene convex hull in the image plane of the augmented reality device when capturing the real-world environment from the theoretical location;
- calculating a minimum distance along the given projection axis so that a width of the scene convex hull in a display of the augmented reality device is less than a width of the display times a downsizing factor.

The minimum distance is a function of the theoretical width and of the field of view. The acts of determining a theoretical width and calculating a minimum distance, repeated for different angular values of the given projection axis around a rotation axis originating from the reference location in the scene convex hull, delivering a set of minimum distances and corresponding angular values defining a border line delimiting the scene comfort area.

Thus, a scene comfort area in which the augmented reality scene can be rendered at full by the display of the augmented reality device is easily calculated and so do the information representative of the scene comfort area.

According to one embodiment, said determining an information representative of an optimal location comprises intersecting the scene comfort area and the scene visibility area delivering an optimal location. The information representative of an optimal location is a function of the optimal location.

Thus, the optimal location is easily obtained and so do the information representative of the optimal location.

According to one embodiment, said calculating an information representative of a scene visibility area comprises, for a given location in the real-world environment, associating to the given location a visibility score representative of the given location being located in the at least one object visibility area. The act of associating a visibility score repeated for different locations in the real-world environment, delivers a scene visibility score map being the information representative of a scene visibility area.

Thus, a visibility score is easily associated to any location in the real-world environment. For instance, the highest number of visibility areas the given location is in, the highest the corresponding visibility score. In variants, the weight of each visibility area can be modulated as a function of the distance between the given location and the object associated to the considered visibility area.

According to one embodiment, the at least one convex hull comprises a set of N objects convex hulls, each associated to at least one object of the augmented reality scene. Said calculating an information representative of a scene comfort area comprises, for a given object convex hull in the set and for a given theoretical location of the augmented reality device in the real-world environment along a given projection axis originating from a reference location in the given object convex hull:

- determining a theoretical width of the given object convex hull in the image plane of the augmented reality device when capturing the real-world environment from the theoretical location;
- calculating a minimum distance along the given projection axis so that a width of the given object convex hull in a display of the augmented reality device is less than a width of the display times a downsizing factor.

The minimum distance is a function of the theoretical width and of the field of view. The acts of determining a theoretical width and calculating a minimum distance, repeated for different angular values of the given projection axis around a rotation axis originating from the reference location in the given object convex hull, delivering a set of minimum distances and corresponding angular values defining a border line delimiting a scene comfort area associated to the given object convex hull.

The repeated acts of determining a theoretical width and calculating a minimum distance further repeated for different convex hulls in the set of N convex hull delivering a set of associated scene comfort areas. Said calculating an information representative of a scene comfort area further comprises, for a given location in the real-world environment, associating, to the given location, a comfort score representative of the given location being located in one or more scene comfort areas in the set of associated scene comfort areas.

Said act of associating a comfort score repeated for different locations in the real-world environment, delivering a scene comfort score map being the information representative of a scene comfort area.

Thus, a comfort score is associated to any location in the real-world environment. For instance, the highest number of scene comfort areas the given location is in, the highest the corresponding comfort score. In variants, the weight of each scene comfort area can be modulated so as to take into account for the importance of the corresponding convex hull in the augmented reality scene.

According to one embodiment, said determining an information representative of an optimal location comprises combining the scene comfort score map and the scene visibility score map delivering an optimal location score map. The information representative of an optimal location is a function of the optimal location score map.

Thus, the optimal location is easily obtained and so do the information representative of the optimal location. For instance, the combining is implemented by summing the scene comfort score and the scene visibility score for each considered location covered by the maps.

According to one embodiment, said determining a theoretical width of the scene convex hull or of the given object convex hull comprises projecting the scene convex hull or the object convex hull on the image plane, the theoretical width being a difference between minimum and maximum coordinates of the projected scene convex hull or the projected object convex hull.

According to one embodiment, said projecting the scene convex hull or the object convex hull on the image plane enforces the relationship:

$$x = K[R\ t]X$$

where:

- X is a vector or matrix comprising the coordinates of the convex hull in a world coordinate system in the real-world;
- R is a rotation matrix for passing from the world coordinate system to a coordinate system of the augmented reality device;
- t is a translation matrix for passing from the world coordinate system to the coordinate system of the augmented reality device;
- x is a vector or matrix comprising the coordinates of the convex hull in the coordinate system of the augmented reality device; and
- K is the camera parameters intrinsic matrix.

According to one embodiment, said calculating a minimum distance enforces the relationship:

$$d = \frac{\left(TW/(2DF)\right)}{\tan(FOV/2)}$$

where:

- $d$ is the minimum distance;
- $TW$ is the theoretical width of the given convex hull
- $DF$ is the downsizing factor; and
- $FOV$ is the field of view.

Thus, the minimum distance is easily calculated. For instance, the downsizing factor is taken as 80% (i.e. 0.8) so that the augmented reality is well rendered on the display of the augmented reality device.

According to one embodiment, the method also comprises obtaining a comfort position of the user during the rendering, said delivering also comprising delivering the comfort position to the user.

Thus, the user's experience is further improved by providing him with the most comfortable position (e.g. seated or standing) for experiencing the rendering of the augmented reality scene.

According to one embodiment, said obtaining a comfort position comprises:

- receiving metadata comprising the comfort position, the metadata being associated to the augmented reality scene; or
- calculating the comfort position based at least on the at least one visibility area and/or the at least one convex hull and/or the field of view.

According to one embodiment, the comfort position belongs to the group comprising a seated position or a standing position. It is calculated that the comfort position is a seated position when at least 80% of the at least one convex hull is at a height lower than 1.4 m.

According to one embodiment, the comfort position belongs to the group comprising a seated position or a standing position. Said calculating the comfort position comprises, for each location along the border line, calculating a corresponding height for which a highest point of the at least one convex hull can be seen with a vertical angle of view lower than 10°. It is decided that the comfort position is a seated position when at least 80% of the corresponding heights are at a height lower than 1.4 m.

According to one embodiment, the method also comprises obtaining a model of the real-world environment. Said determining an information representative of an optimal location also takes into account the model.

Thus, the real-world environment of the user is taken into account for determining the information representative of an optimal location. This allows further improving the user's experience, e.g. by taking into account for the presence of seats, of free space, etc.

Another aspect of the present disclosure relates to a computer program product comprising program code instructions for implementing the above-mentioned method for assisting a positioning (in any of its different embodiments), when the program is executed on a computer or a processor.

Another aspect of the present disclosure relates to a device for assisting a positioning. Such a device is configured for implementing the above-mentioned method for assisting a positioning (in any of its different embodiments). Thus, the features and advantages of this device are the same as those of the method for training described above. Therefore, they are not detailed any further.

## 4. LIST OF FIGURES

Other features and advantages of embodiments shall appear from the following description, given by way of indicative and non-exhaustive examples and from the appended drawings, of which:

- Figure 1 illustrates a user watching an AR scene overlaid on a view of the real-world environment captured by an AR device;
- Figure 2a, 2b and 2c illustrate the concept of visibility areas for different exemplary objects;
- Figure 3 illustrates a flowchart of a method for assisting a positioning of a user according to one embodiment of the present disclosure;
- Figure 4a and 4b illustrate some acts of the method of figure 3 according to different embodiments of the present disclosure;
- Figure 5 illustrates the derivation of a scene visibility area according to one embodiment of the present disclosure;
- Figure 6a, 6b and 6c illustrate the determination of a minimum distance for a good rendering of a convex hull on a display of an AR device;
- Figure 7a, 7b and 7c illustrate the determination of a scene comfort area according to one embodiment of the present disclosure;
- Figure 8 illustrates the derivation of an optimal location for the user according to one embodiment of the present disclosure; and
- Figure 9 illustrates an exemplary device that can be used for implementing the method of figure 3, 4a and 4b.

## 5. DETAILED DESCRIPTION

In all of the figures of the present document, the same numerical reference signs designate similar elements and steps.

The disclosed technique relates to a method for assisting a positioning, in a real-world environment, of a user of an AR device rendering an AR scene overlaid on a view of the real-world environment captured (e.g. when the AR device is a video pass-through device) or observed through (e.g. when the AR device is an optical see-through device) by the AR device. Such a method comprises an act of determining an information representative of an optimal location of the user during the rendering (e.g. whether the optimal location itself, or a map representative of the best locations in the real-world environment, or any indication for guiding the user toward such location, etc.). Such determining is based at least on a field of view of the AR device, on at least one convex hull associated to the AR scene, and on at least one object visibility area associated to a corresponding object in the AR scene. Thus, the determination can be done before the start of the rendering of the augmented reality scene. The method also comprises an act of delivering the information representative of an optimal location to the user (e.g. the information can be rendered to the user by the augmented reality device) for him to enjoy at best the augmented reality scene.

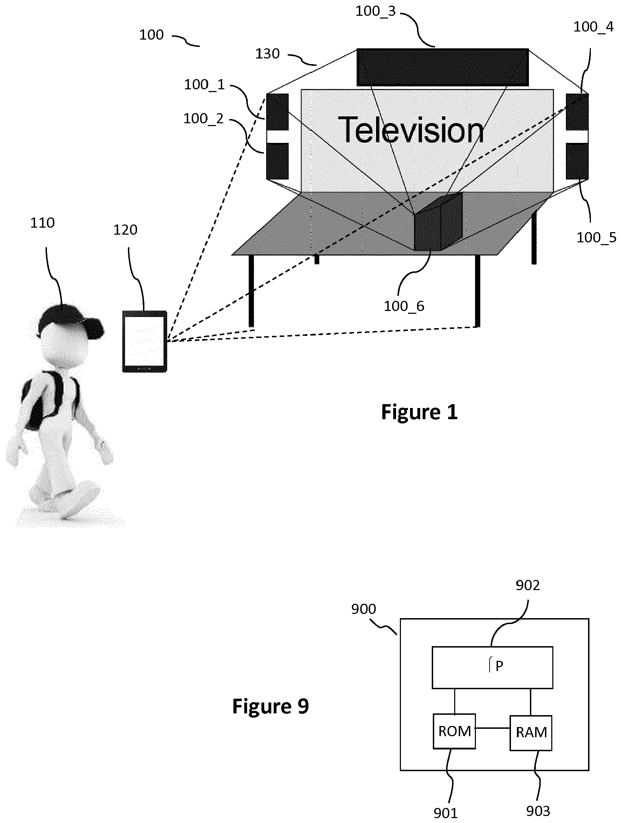

**Figure 1** illustrates a user 110 watching an AR scene 100 overlaid on a view of the real-world environment captured by an AR device 120.

More particularly, the real-world environment comprises in this particular example a television and a table on which the television is disposed. However, the disclosed method works equally well for any real-world environment.

The AR device 120 is a tablet that captures the real-world environment through its camera. The captured real-world environment is rendered on the display of the tablet as well as the AR scene 100 that is overlaid on the captured real-world environment. In variants, another video pass-through devices or any optical see-through devices may be used in place of a tablet.

The rendering capabilities of the AR scene by the AR device 120 is determined by its field of view (FOV). In the case of a tablet, as for any video pass-through device, the FOV corresponds to the field of view of the camera capturing the real-world environment. More particularly, it depends on the focal length of the camera and on the size of the display according to:

$$FOV = 2 * Atan( Diag / (2 * Focale) )$$

with "Diag" that stands for the diagonal of the display and "Focale" that stands for the focal length of the camera.

In variants where the AR device is of the optical see-through kind, the FOV is a manufacturer's data.

Back to figure 1, the AR scene 100 comprises in this particular example six artificial objects 100_1 to 100_6. However, any number of artificial objects could be considered.

The surface determined by joining the outer apex of the objects 100_1 to 100_6 that compose the AR scene 100 define the scene convex hull 130.

Alternatively, the surface determined by joining the outer apex of only some of the objects 100_1 to 100_6 of the scene defines an object convex hull associated to the corresponding object(s).

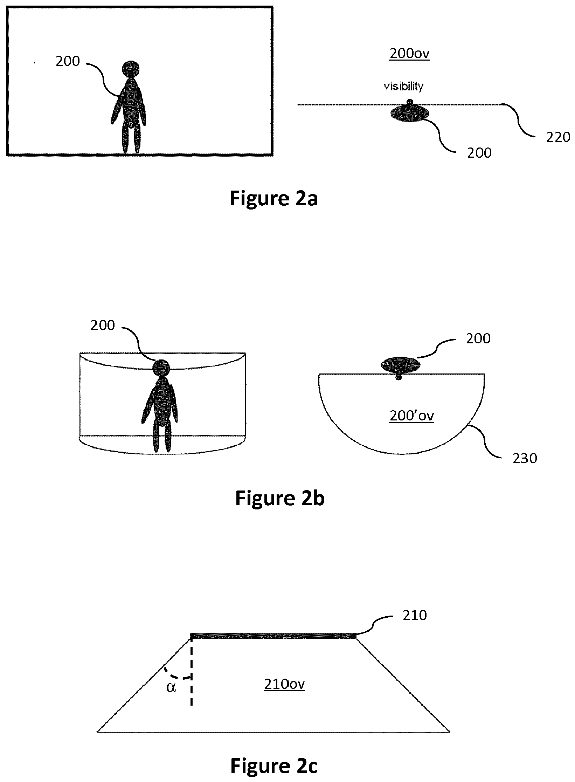

Referring now to **figures 2a to 2c,** we present the concept of visibility areas for different exemplary objects.

More particularly, a visibility area associated to a given object, called object visibility area in the sequel, is defined as the area allowing a quality observation of the given object. It depends on the angle of observation and on the observation distance of the user 110 to the given object.

For instance, for an object 200 representing a human that is simply standing, the visibility area 200ov can be defined by default (i.e. without taking into account for any distance criteria) as the foreground delimited by the half plane 220 that passes through the considered object 200 in order to ensure that the face of the represented human can be seen (figure 2a).

Conversely, when a distance criteria is taken into account (e.g. so has to ensure that the face of the represented human can be correctly seen with its details), the visibility area 200'ov may be defined as a half cylinder 230 (figure 2a). In variants, the radius of the half cylinder 230 may for instance be taken as five times the height of the object.

Another example is given in figure 2c where the considered object 210 is a plan object (e.g. a television display). In that case, the visibility area 210ov may be defined as the foreground delimited by the object 210, taking into account for an observation angle $\alpha$ (e.g. of 45°) and a given maximal observation distance from the object 210. In variants, the observation angle $\alpha$ may be taken up to 90° so that all the foreground delimited by the object 210 is considered.

In some embodiments, such objects visibility areas 200ov, 200'ov, 210ov are provided as meta-data associated to the AR content to be rendered.

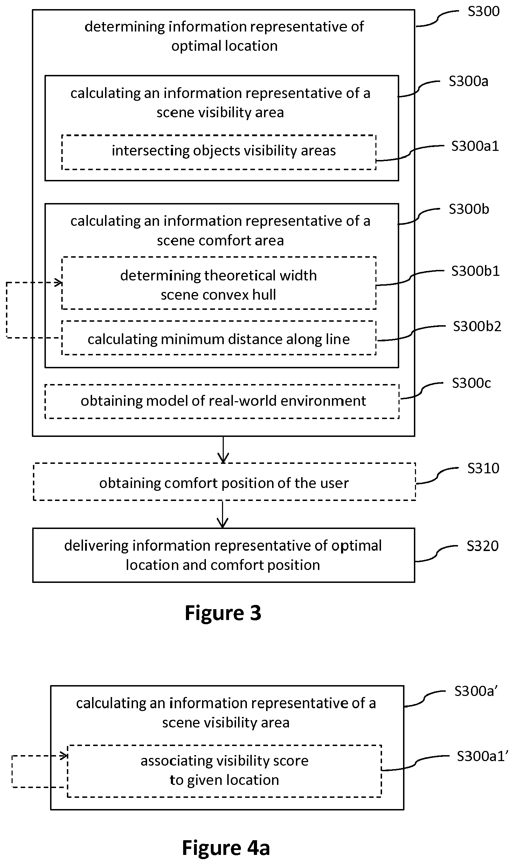

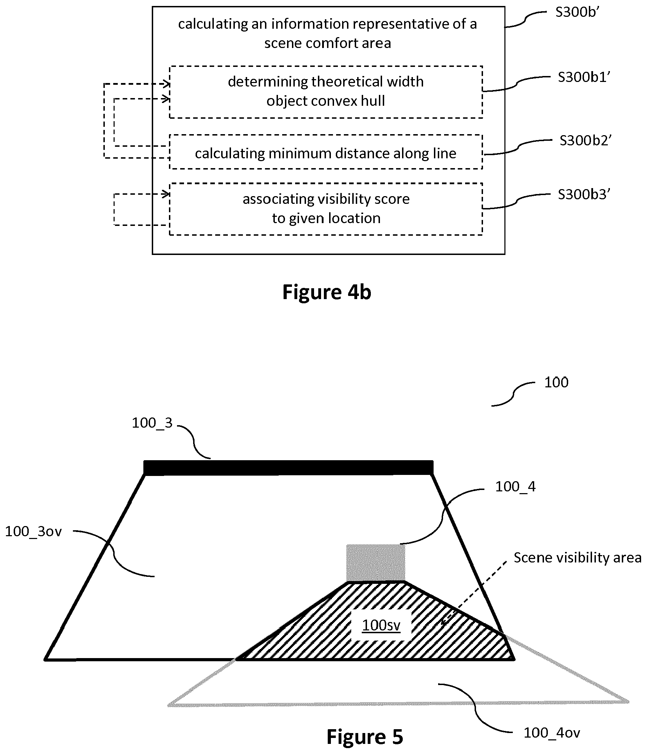

**Figure 3** illustrates a flowchart of a method for assisting a positioning of a user according to one embodiment of the present disclosure. The corresponding steps are detailed through examples discussed in reference to **figures 5, 6a to 6c, 7a to 7c and 8.**

In **step S300,** an information representative of an optimal location of the user 110 during the rendering of the AR scene 100 by the AR device 120 is determined (e.g. whether the optimal location itself, or a map representative of the best locations in the real-world environment, or any indication for guiding the user toward such location, etc.). Such determining is based at least on:

- a FOV of the AR device 120;
- at least one convex hull 130 associated to the AR scene 100; and
- at least one object visibility area associated to a corresponding object 100_1 to 100_6 in the AR scene 100.

Thus, the determination relies only on features of both the augmented reality scene (e.g. through convex hull(s) associated to it and through visibility area(s) of one or more of the objects associated to it) and the augmented reality device (e.g. through its field of view). Consequently, such determination can be done before the start of the rendering of the augmented reality scene, thus allowing a full and confident determination independently of any real-time constraints.

In **step S320,** the information determined in step S300 is delivered to the user 110 for him to enjoy at best the augmented reality scene (for instance, the information representative of the optimal location can be rendered to the user by the augmented reality device).

More particularly, the step S300 comprises:

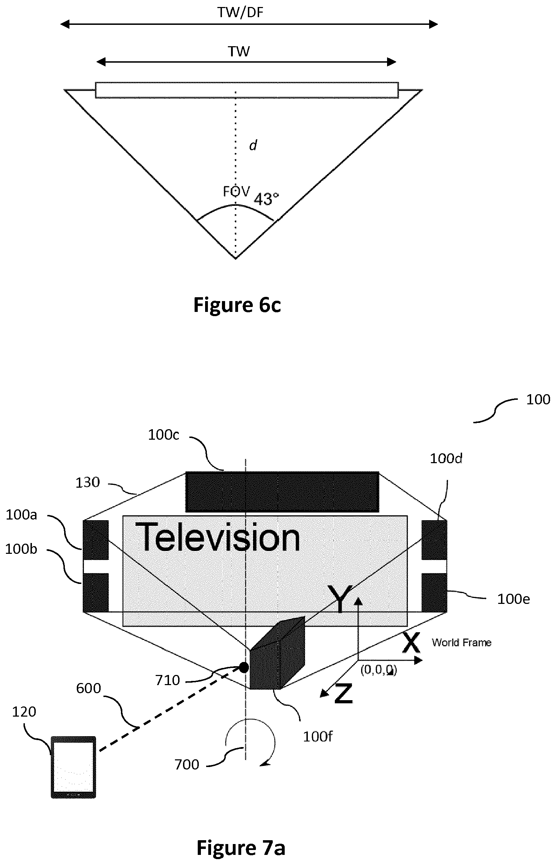

- a **step S300a** of calculating an information representative of a scene **visibility** area of the AR scene 100 based on the at least one object visibility area. In practice, such scene visibility area corresponds to an area from which each object 100_1 to 100_6 of the RA scene 100 can be seen with a good quality of details as discussed above in relationship with figures 2a to 2c; and
- a **step S300b** of calculating an information representative of a scene **comfort** area of the AR scene 100 based on the FOV of the AR device 120 and on the at least one convex hull 130. In practice, such scene comfort area corresponds to an area from which the entire AR scene 100 can be rendered on a display of the AR device 120 as illustrated below in relation with step S300b and figures 7a to 7c.

The information representative of an optimal location is determined based at least on the information representative of a scene visibility area and on the information representative of a scene comfort area.

Thus, taking into account for both the overall shape of the augmented reality scene in view of the caption capacities of the augmented reality device (e.g. through its field of view) and for the visibility area(s) of the object(s) of the augmented reality scene allows determining an optimum positioning of the user.

In the embodiment of figure 3, the information representative of a scene visibility area is directly a scene visibility area of the AR scene 100, and the information representative of a scene comfort area is directly a scene comfort area of the AR scene 100.

Consequently, assuming that the AR scene 100 comprises a set of N objects (e.g. the six objects 100_1 to 100_6) having associated object visibility areas, the step S300a comprises a **step S300a1** of intersecting the object visibility areas for delivering the scene visibility area of the AR scene 100.

Such processing is further illustrated in figure 5 in which part of the AR scene 100 is represented. More particularly, only two of the virtual objects, i.e. objects 100_3 and 100_4 of the AR scene 100 are represented from a top view. The objects 100_3 and 100_4 have corresponding object visibility areas 100_3ov and 100_4ov.

The scene visibility area 100sv as delivered by the enforcement of step S300a1 thus corresponds to the dashed area which is the intersection between the object visibility areas 100_3ov and 100_4ov of the two objects 100_3 and 100_4.

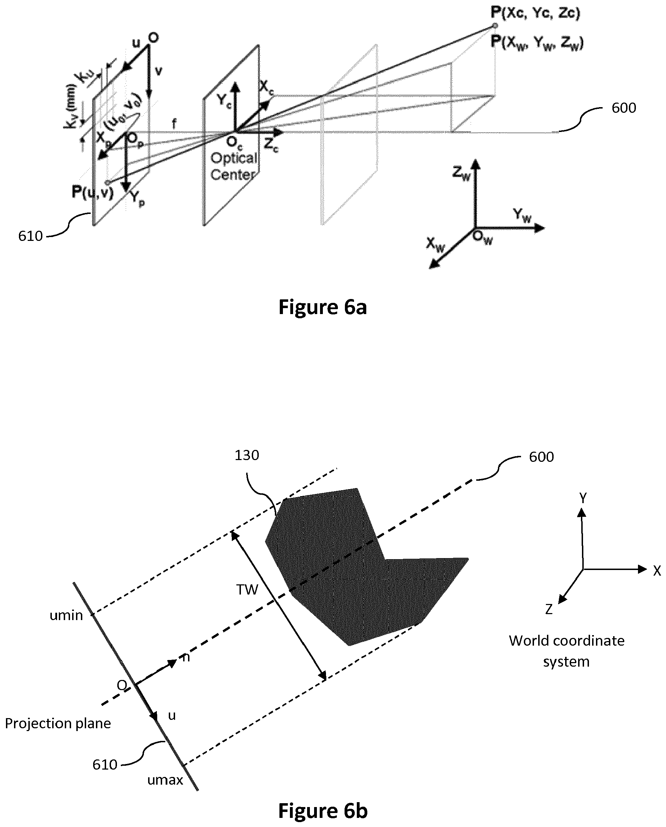

Back to figure 3, and referring to the examples illustrated in figures 6a to 6c, the step S300b of calculating a scene comfort area comprises, for the scene convex hull 130 and for a given theoretical location of the AR device 120 in the real-world environment along a given projection axis 600 originating from a reference location 710 in the scene convex hull 130:

- a **step S300b1** of determining a theoretical width TW of the scene convex hull 130 in an image plane 610 of the AR device 120 when capturing the real-world environment from the theoretical location; and
- a **step S300b2** of calculating a minimum distance d along the given projection axis 600 so that a width of the scene convex hull 130 in a display of the AR device 120 is less than a width of the display times a downsizing factor DF.

The minimum distance d is a function of the theoretical width TW and of the FOV of the AR device 120.

For example, the theoretical width TW of the scene convex hull 130 in the image plane 610 is obtained by projecting the scene convex hull 130 on the image plane 610.

Such projection mechanism is illustrated in figure 6a in the case of a pinhole camera type for the AR device 120, and in figure 6b in a direct orthogonal projection case of the scene convex hull 130.

A more rigorous derivation would involve the parameters of the camera of the AR device 120. In that case, the projection of the scene convex hull 130 on the image plane 610 would enforce the relationship:

$$x = K[R\ t]X$$

where:

- X is a vector or matrix comprising the coordinates of the scene convex hull 130 in a world coordinate system in the real-world;
- R is a rotation matrix for passing from the world coordinate system to a coordinate system of the AR device 120;
- t is a translation matrix for passing from the world coordinate system to the coordinate system of the AR device 120;
- $x$ is a vector or matrix comprising the coordinates of the scene convex hull 130 in the coordinate system of the AR device 120; and
- K is the camera parameters intrinsic matrix.

Whatever the considered method for projecting the scene convex hull 130 on the image plane 610, the theoretical width TW is determined as the difference between minimum and maximum coordinates of the projected scene convex hull 130 on the image plane 610 (umin and umax in figure 6b).

Based on the determined theoretical width TW and of the FOV of the AR device 120, the minimum distance d may for instance be based on the relationship (figure 6c):

$$d = \frac{(TW/(2DF))}{\tan(FOV/2)}$$

For instance, the downsizing factor DF is taken as 80% (i.e. 0.8) so that the AR scene 100 is well rendered on the display of the augmented reality device.

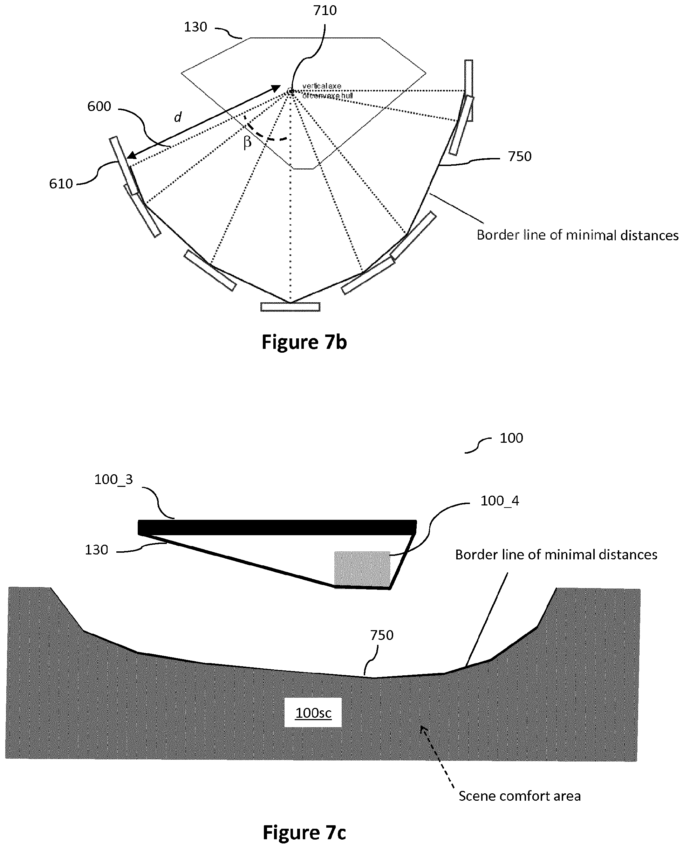

Back to figure 3, and in relation with figures 7a and 7b, the steps S300b1 of determining a theoretical width TW and S300b2 of calculating a minimum distance d, are repeated iteratively for different angular values β of the given projection axis 600 around a rotation axis 700 for delivering a set of minimum distances and corresponding angular values defining a border line 750 delimiting the scene comfort area 100sc. As illustrated in figure 7c (still reconsidering the simplified top view of the AR scene 100 with only two objects represented, i.e. objects 100_3 and 100_4 as in figure 5), the scene comfort area 100sc is defined as the set of locations that are farther from the scene convex hull 130 than that delimited by the border line 750 so as to insure a good enough rendering of the scene convex hull 130 on the display of the AR device 120.

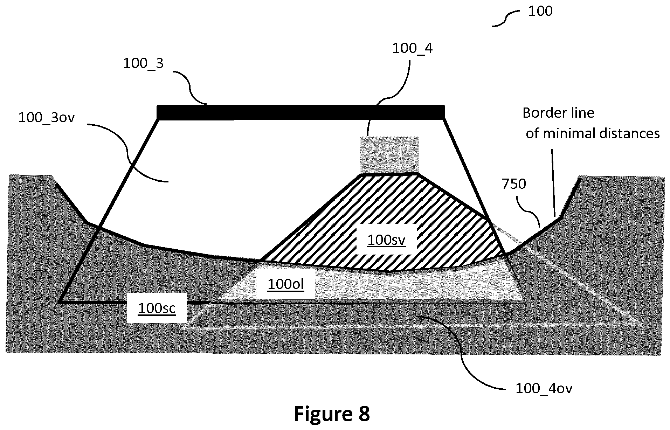

In the embodiment of figure 3 where the information representative of a scene visibility area is directly a scene visibility area of the AR scene 100 and the information representative of a scene comfort area is directly a scene comfort area of the AR scene 100, the information representative of an optimal location is directly the optimal location 100ol. Thus, the step S300 of determining the information representative of the optimal location also comprises intersecting the scene comfort area 100sc (figure 8 - dark grey area) calculated at step S300b and the scene visibility area 100sv (figure 8 - dashed area) calculated at step S300a for delivering the optimal location 100ol (figure 8 - light grey area).

In a **step S300c,** a model of the real-world environment is obtained (for instance through a scan of the real-world, or as a 2D or 3D map provided as metadata). In that case, the information representative of an optimal location is determined taking also into account the real-world environment model. This allows further improving the user's experience, e.g. by taking into account for the presence of seats, of free space, etc.

However, in other embodiments, such model of the real-world environment is not obtained and not used for allowing a simplified enforcement of the present method.

In a **step S310,** a comfort position of the user 110 during the rendering of the AR scene 100 is obtained (e.g. seated or standing). In that case, the step S320 of delivering also comprises the delivering to the user of the comfort position. Thus, the user's experience is further improved by providing him with the most comfortable position for experiencing the rendering of the AR scene.

More particularly, the step S310 comprises:

- receiving metadata comprising the comfort position, the metadata being associated to the AR scene 100. Thus, the comfort position is easily obtained; or
- calculating the comfort position based at least on the object(s) visibility area 100_3ov, 100_4ov and/or the at least one convex hull 130 and/or the FOV of the AR device 120.

For instance, it is calculated that the comfort position is a seated position when at least 80% of the convex hull 130 is at a height lower than 1.4 m.

In another example, the calculating of the comfort position comprises, for each location along the border line 750, calculating a corresponding height for which a highest point of the convex hull 130 can be seen with a vertical angle of view lower than 10°. It is decided that the comfort position is a seated position when at least 80% of the corresponding heights are at a height lower than 1.4 m.

However, in other embodiments, the step S310 is not enforced so that no comfort position is obtained thus allowing a simplified enforcement of the present method.

**Figures 4a and 4b** illustrate a step S300a' of calculating an information representative of a scene visibility area and of a step S300b' of calculating an information representative of a scene comfort area in an alternative embodiment than that of steps S300a and S300b of figure 3.

In the present embodiment, the information representative of the scene visibility and/or comfort area are corresponding visibility and/or comfort scores associated to a given location. This allows a smoother rendering of the visibility or comfort quality of a location than the areas themselves as disclosed above in relation with figure 3.

More particularly, the **step S300a'** (figure 4a) of calculating an information representative of a scene visibility area comprises, for a given location in the real-world environment, a **step S300a1'** of associating to the given location a visibility score representative of the given location being located in at least one object visibility area (e.g. the objects visibility areas 100_3ov, 100_4ov of figure 3). For instance, the highest number of visibility areas the given location is in, the highest the corresponding visibility score. In variants, the weight of each object visibility area can be modulated as a function of the distance between the given location and the object associated to the considered visibility area.

The step S300a1' of **associating** a visibility score repeated for different locations in the real-world environment, delivers a scene visibility score map that corresponds to the information representative of a scene visibility area.

Consequently, a visibility score is easily associated to any location in the real-world environment, and not only to the locations laying at the intersection of the objects visibility areas 100_3ov, 100_4ov as in the embodiment discussed above in relation with figure 3. Indeed, such intersection may be empty when many objects are involved so that the score approach of the present embodiment may be preferred in such situation.

In the present embodiment, the AR scene 100 comprises a set of N' objects convex hulls, each associated to at least one object among the objects 100_1 to 100_6 of the AR scene 100.

Consequently, the **step S300b'** (figure 4b) of calculating an information representative of a scene comfort area comprises, for a given object convex hull in the set of N' objects convex hulls and for a given theoretical location of the AR device 120 in the real-world environment along a given projection axis originating from a reference location in the given object convex hull:

- a **step S300b1'** of determining a theoretical width of the given object convex hull; and
- a **step S300b2'** of calculating a minimum distance along the given projection axis.

More particularly, the step S300b1' of determining a theoretical width and the step S300b2' of calculating a minimum distance involve respectively the same processing than the steps S300b1 and S300b2 disclosed above in relation with figure 3 (in any of their embodiments) but now applied to the given object convex hull instead of the scene convex hull 130.

Consequently, the step S300b1' of determining a theoretical width and the step S300b2' of calculating a minimum distance, when repeated for different angular values of the given projection axis around a rotation axis originating from the reference location in the given object convex hull, delivers a set of minimum distances and corresponding angular values defining a border line delimiting a scene comfort area associated to the given object convex hull.

Thus, repeating the step S300b1' of determining a theoretical width and the step S300b2' of calculating a minimum distance for different convex hulls in the set of N' convex hull delivers a set of associated scene comfort areas.

The **step S300b'** of calculating an information representative of a scene comfort area further comprises, for a given location in the real-world environment, a **step S300b3'** of associating to the given location, a comfort score representative of the given location being located in one or more scene comfort areas in the set of associated scene comfort areas (for instance, the highest number of scene comfort areas the given location is in, the highest the corresponding comfort score. In variants, the weight of each scene comfort area can be modulated so as to take into account for the importance of the corresponding convex hull in the augmented reality scene).

The step S300b3' of associating a comfort score repeated for different locations in the real-world environment, delivers a scene comfort score map that corresponds to the information representative of the scene comfort area.

Thus, a comfort score is easily associated to any location in the real-world environment.

In the present embodiment, the step S300 of determining an information representative of an optimal location comprises combining the scene comfort score map calculated at step S300b' and the scene visibility score map calculated at step S300a' for delivering an optimal location score map that corresponds to the information representative of an optimal location. For instance, the combining is implemented by summing the scene comfort score and the scene visibility score for each considered location jointly covered by the maps.

**Figure 9** illustrates the structural blocks of an exemplary device that can be used for implementing the method for assisting a positioning of a user according to the disclosure (according to any of the embodiments disclosed above).

In an embodiment, a device 900 for implementing the disclosed method comprises a non-volatile memory 903 (e.g. a read-only memory (ROM) or a hard disk), a volatile memory 901 (e.g. a random access memory or RAM) and a processor 902. The non-volatile memory 903 is a non-transitory computer-readable carrier medium. It stores executable program code instructions, which are executed by the processor 902 in order to enable implementation of the method described above (method for assisting a positioning of a user according to the disclosure) in its various embodiment disclosed in relationship with figure 3, 4a and 4b.

Upon initialization, the aforementioned program code instructions are transferred from the non-volatile memory 903 to the volatile memory 901 so as to be executed by the processor 902. The volatile memory 901 likewise includes registers for storing the variables and parameters required for this execution.

All the steps of the above method for assisting a positioning of a user according to the disclosure may be implemented equally well:

- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a floppy disk, a CD-ROM or a DVD-ROM) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

**Claims**

1. Method for assisting a positioning, in a real-world environment, of a user (110) of an augmented reality device (120) rendering, on an image plane (610) of said augmented reality device, an augmented reality scene (100) overlaid on a view of said real-world environment,
**characterized in that** it comprises:

   - **determining** (S300) an information representative of an optimal location of said user during said rendering based at least on:

      - a field of view of said augmented reality device;
      - at least one convex hull (130) associated to said augmented reality scene; and
      - at least one object visibility area associated to a corresponding object (100_1, 100_2, 100_3, 100_4, 100_5, 100_6) in said augmented reality scene; and

   - **delivering** (S320) said information representative of an optimal location to said user.

2. Method according to claim 1
wherein said **determining** (S300) an information representative of an optimal location comprises:

   - **calculating** (S300a, S300a') an information representative of a scene **visibility** area of said augmented reality scene based on said at least one object visibility area; and
   - **calculating** (S300b, S300b') an information representative of a scene **comfort** area of said augmented reality scene based on said field of view and on said at least one convex hull;

   said information representative of an optimal location being determined based at least on said information representative of a scene visibility area and on said information representative of a scene comfort area.

3. Method according to claim 2
wherein said augmented reality scene comprises a set of N objects having associated object visibility areas,
wherein said **calculating** an information representative of a scene **visibility** area comprises **intersecting** (S300a1) said object visibility areas for delivering said scene visibility area (100sv).

4. Method according to claim 2 or 3
wherein said at least one convex hull comprises a scene convex hull,
and wherein said **calculating** an information representative of a scene **comfort** area comprises, for said scene convex hull and for a given theoretical location of said augmented reality device in said real-world environment along a given projection axis (600) originating from a reference location (710) in said scene convex hull:

- **determining** (S300b1) a theoretical width of said scene convex hull in said image plane (610) of said augmented reality device when capturing said real-world environment from said theoretical location;
- **calculating** (S300b2) a minimum distance along said given projection axis so that a width of said scene convex hull in a display of said augmented reality device is less than a width of said display times a downsizing factor,

said minimum distance being a function of said theoretical width and of said field of view;
said acts of **determining** a theoretical width and **calculating** a minimum distance, repeated for different angular values of said given projection axis around a rotation axis (700) originating from said reference location in said scene convex hull, delivering a set of minimum distances and corresponding angular values defining a border line (750) delimiting said scene comfort area (100sc).

5. Method according to any of claims 2 to 4,
wherein said **determining** an information representative of an optimal location comprises **intersecting** said scene **comfort** area and said scene **visibility** area delivering an optimal location (100ol),
said information representative of an optimal location being a function of said optimal location.

6. Method according to claim 2
wherein said **calculating** (S300a') an information representative of a scene **visibility** area comprises, for a given location in said real-world environment:

- **associating** (S300a1') to said given location a visibility score representative of said given location being located in said at least one object visibility area;

said act of **associating** a visibility score repeated for different locations in said real-world environment, delivering a scene visibility score map being said information representative of a scene **visibility** area.

7. Method according to claim 2 or 6
wherein said at least one convex hull comprises a set of N objects convex hulls, each associated to at least one object of said augmented reality scene, and wherein said **calculating** (S300b') an information representative of a scene **comfort** area comprises, for a given object convex hull in said set and for a given theoretical location of said augmented reality device in said real-world environment along a given projection axis originating from a reference location in said given object convex hull:

- **determining** (S300b1') a theoretical width of said given object convex hull in said image plane of said augmented reality device when capturing said real-world environment from said theoretical location;
- **calculating** (S300b2') a minimum distance along said given projection axis so that a width of said given object convex hull in a display of said augmented reality device is less than a width of said display times a downsizing factor,

said minimum distance being a function of said theoretical width and of said field of view;
said acts of **determining** a theoretical width and **calculating** a minimum distance, repeated for different angular values of said given projection axis around a rotation axis originating from said reference location in said given object convex hull, delivering a set of minimum distances and corresponding angular values defining a border line delimiting a scene comfort area associated to said given object convex hull, said repeated acts of **determining** a theoretical width and **calculating** a minimum distance further repeated for different convex hulls in said set of N convex hull delivering a set of associated scene comfort areas,
and wherein said **calculating** an information representative of a scene comfort area further comprises, for a given location in said real-world environment,

- **associating** (S300b3'), to said given location, a comfort score representative of said given location being located in one or more scene comfort areas in said set of associated scene comfort areas;

said act of **associating** a comfort score repeated for different locations in said real-world environment, delivering a scene comfort score map being said information representative of a scene **comfort** area.

**8.** Method according to claim 7 in that it depends on claim 6,
wherein said **determining** an information representative of an optimal location comprises **combining** said scene comfort score map and said scene visibility score map delivering an optimal location score map,
said information representative of an optimal location being a function of said optimal location score map.

**9.** Method according to claim 4 or 7
wherein said **determining** a theoretical width of said scene convex hull or of said given object convex hull comprises **projecting** said scene convex hull or said object convex hull on said image plane, said theoretical width being a difference between minimum and maximum coordinates of said projected scene convex hull or said projected object convex hull.

**10.** Method according to claim 4 or 7 or 10
wherein said **calculating** a minimum distance enforces the relationship:

$$d = \frac{\left(TW/(2DF)\right)}{\tan(FOV/2)}$$

where:

- $d$ is said minimum distance;
- $TW$ is said theoretical width of said given convex hull
- $DF$ is said downsizing factor; and
- $FOV$ is said field of view.

**11.** Method according to any of the claims 1 to 10
also comprising **obtaining** a comfort position of the user during said rendering, said **delivering** also comprising delivering said comfort position to the user.

**12.** Method according to claim 11,
wherein said obtaining a comfort position comprises:

- **receiving** metadata comprising said comfort position, said metadata being associated to said augmented reality scene; or
- **calculating** said comfort position based at least on said at least one visibility area and/or said at least one convex hull and/or said field of view.

**13.** Method according to any of the claims 1 to 12,
also comprising **obtaining** a model of said real-world environment,
said **determining** an information representative of an optimal location also taking into account said model.

**14.** Computer program product **characterized in that** it comprises program code instructions for implementing the method according to at least one of the claims 1 to 13, when said program is executed on a computer or a processor.

**15.** Device (900) for assisting a positioning, in a real-world environment, of a user (110) of an augmented reality device (120) rendering an augmented reality scene (100) overlaid on a view of said real-world environment captured by said augmented reality device,
**characterized in that** it comprises a processor (902) configured for:

- **determining** an information representative of an optimal location of said user during said rendering based at least on:

    - a field of view of said augmented reality device;
    - at least one convex hull (130) associated to said augmented reality scene; and
    - at least one object visibility area associated to a corresponding object (100_1, 100_2, 100_3, 100_4, 100_5, 100_6) in said augmented reality scene; and

- **delivering** said information representative of an optimal location to said user.

100_3

100

100_4

130

100_1

100_2

Television

110

120

100_5

100_6

Figure 1

902

900

P

Figure 9

ROM    RAM

901    903

200

200ov

visibility

200

220

**Figure 2a**

200

200

200'ov

230

**Figure 2b**

210

α

210ov

**Figure 2c**

| determining information representative of optimal location | S300 |

| calculating an information representative of a scene visibility area | S300a |

| intersecting objects visibility areas | S300a1 |

| calculating an information representative of a scene comfort area | S300b |

| determining theoretical width scene convex hull | S300b1 |

| calculating minimum distance along line | S300b2 |

| obtaining model of real-world environment | S300c |

| obtaining comfort position of the user | S310 |

| delivering information representative of optimal location and comfort position | S320 |

**Figure 3**

| calculating an information representative of a scene visibility area | S300a' |

| associating visibility score to given location | S300a1' |

**Figure 4a**

calculating an information representative of a scene comfort area — S300b'

determining theoretical width object convex hull — S300b1'

calculating minimum distance along line — S300b2'

associating visibility score to given location — S300b3'

**Figure 4b**

100

100_3

100_4

100_3ov

Scene visibility area

100sv

**Figure 5**

100_4ov

15

**Figure 6a**

**Figure 6b**

TW/DF

TW

$d$

FOV 43°

**Figure 6c**

100

100c

100d

130

100a

100b

Television

Y

X

World Frame

100e

710

600

120

(0,0,0)

Z

100f

700

**Figure 7a**

730

130

710

vertical axe
of convex hull

600

d

β

610

750

Border line of minimal distances

**Figure 7b**

100

100_3

100_4

130

Border line of minimal distances

750

100sc

Scene comfort area

**Figure 7c**

100

100_4

100_3

100_3ov

Border line
of minimal distances

750

100sv

100ol

100sc

100_4ov

**Figure 8**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 291 531 A1 (THOMSON LICENSING [FR]) 7 March 2018 (2018-03-07) * abstract * * paragraph [0005] - paragraph [0014] * * paragraph [0024] - paragraph [0046]; figures 1-8 * ----- | 1-15 | INV. G06F3/01 G06T19/00 |
| A | US 2018/095524 A1 (CHEW YEN HSIANG [MY]) 5 April 2018 (2018-04-05) * abstract * ----- | 1-15 | |
| | | | TECHNICAL FIELDS SEARCHED (IPC) |
| | | | G06F G06T |

The present search report has been drawn up for all claims

| Place of search | Date of completion of the search | Examiner |
|---|---|---|
| Munich | 19 September 2018 | Liebhart, Manfred |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 30 5455

This annex lists the patent family members relating to the patent documents cited in the above-mentioned European search report.
The members are as contained in the European Patent Office EDP file on
The European Patent Office is in no way liable for these particulars which are merely given for the purpose of information.

19-09-2018

| Patent document cited in search report | | | Publication date | Patent family member(s) | | | Publication date |
|---|---|---|---|---|---|---|---|
| EP 3291531 | | A1 | 07-03-2018 | BR | 102017019134 | A2 | 02-05-2018 |
| | | | | CA | 2977074 | A1 | 06-03-2018 |
| | | | | CN | 107801045 | A | 13-03-2018 |
| | | | | EP | 3291531 | A1 | 07-03-2018 |
| | | | | EP | 3291536 | A1 | 07-03-2018 |
| | | | | JP | 2018067301 | A | 26-04-2018 |
| | | | | KR | 20180027361 | A | 14-03-2018 |
| | | | | US | 2018070019 | A1 | 08-03-2018 |
| US 2018095524 | | A1 | 05-04-2018 | US | 2018095524 | A1 | 05-04-2018 |
| | | | | WO | 2018063754 | A2 | 05-04-2018 |

For more details about this annex : see Official Journal of the European Patent Office, No. 12/82